# EUROPEAN PATENT APPLICATION

(11) **EP 4 775 500 A2**
(43) Date of publication of application: **15.07.2026**
(21) Application number: 26173803.3
(22) Date of filing: 19.07.2022
(51) Int. Cl.: B65B 25/00

(54) **FOOD STEAMING APPARATUS AND FOOD PROCESSING SYSTEM**

(30) Priority: 28.10.2021 KR 20210145509
(62) Divisional of application: 22887294.1
(71) Applicant: CJ Cheiljedang Corporation, Seoul 04560 (KR)
(72) Inventor: MOON, Sung Yang, 04560 Seoul (KR); JEONG, Doo Seong, 04560 Seoul (KR); KIM, Hak Nyoun, 04560 Seoul (KR)
(74) Representative: Ipsilon

(57) **Abstract**

A food steaming apparatus, according to the present invention, comprises multi-stage conveying parts provided to continuously convey food in the forward and backward directions and spaced apart from each other in the vertical direction; and a steaming part comprising a steaming chamber forming a steaming space through which the multi-stage conveying parts pass, so as to steam the food conveyed by the multi-stage conveying parts, and a plurality of conveying covers provided to respectively cover the multi-stage conveying parts at the top of the multi-stage conveying parts passing through the inside of the steaming space so as to divide the steaming space into a plurality of steaming division spaces that are a plurality of spaces.

## Description

### [Technical Field]

The present invention relates to a food steaming apparatus and a food processing system for producing steamed food.

### [Background Art]

The food steaming and freezing processes for producing foods, which undergo a steaming process, especially frozen dumplings, may be performed continuously. A production line used in the food steaming and freezing process may be configured in such a way that when food is disposed and transported on a single conveyor, appropriate processing is performed on the transported food.

A large amount of food may be produced through the above-described process, but as a demand for frozen foods such as frozen dumplings has rapidly increased, it has become difficult to produce a sufficient number of frozen foods in a given period of time in limited facilities. To increase production, a method of arranging multiple identical facilities may be used. However, there was a problem that installing additional facilities is difficult to implement realistically due to economic reasons and space constraints.

It is possible to increase the number of foods processed per hour by creating more paths along which food enters limited facilities and performing processing such as steaming. However, the degree of processing such as steaming varies for each part of a facility, so food production of uniform quality cannot be guaranteed. That is, the production may be increased, but production quality deteriorates.

### [Disclosure]

### [Technical Problem]

The present invention was devised to solve these problems and provides a food steaming apparatus and a food processing system capable of processing a large amount of food in a limited space.

### [Technical Solution]

According to an embodiment of the present invention, a food steaming apparatus includes multi-stage conveying parts provided to continuously convey food in forward and backward directions and spaced apart from each other in a vertical direction; and a steaming part including a steaming chamber forming a steaming space through which the multi-stage conveying parts pass, so as to steam the food conveyed by the multi-stage conveying parts, and a plurality of conveying covers provided to respectively cover the multi-stage conveying parts at a top of the multi-stage conveying parts passing through an inside of the steaming space so as to divide the steaming space into a plurality of steaming division spaces that are a plurality of spaces.

According to another embodiment of the present invention, a food processing system includes multi-stage conveying parts provided to continuously convey food along a forward and backward directions and disposed to be spaced apart from each other in a vertical direciton; a steaming part including a steaming chamber that forms a steaming space through which the multi-stage conveying parts pass, so as to steam the food conveyed by the multi-stage conveying parts and a plurality of conveying covers disposed at a top of the multi-stage conveying parts so as to divide the steaming space into a plurality of steaming division spaces which are a plurality of spaces; and a freezing part provided to freeze the food that is steamed in the steaming part and is conveyed by the multi-stage conveying parts.

### [Advantageous Effects]

Accordingly, it is possible to produce a large amount of food in a limited space, and perform appropriate processing individually depending on a location of food.

### [Brief Description of the Drawings]

FIG. 1 is a perspective view of a food processing system according to an embodiment of the present invention.
FIG. 2 is a top view of the food processing system in a state in which an internal structure of the food processing system according to the embodiment of the present invention is exposed.
FIG. 3 is a side view of the food processing system in the state in which the internal structure of the food processing system according to the embodiment of the present invention is exposed.
FIG. 4 is a front view of a food steaming apparatus in a state in which an internal structure of a steaming part according to an embodiment of the present invention is exposed.
FIG. 5 is a diagram illustrating a portion of an internal structure of the food steaming apparatus according to an embodiment of the present invention.
FIG. 6 is a perspective view of a steaming cover according to an embodiment of the present invention.
FIG. 7 is a view illustrating a state in which a side surface of the steaming part according to an embodiment of the present invention is opened.
FIG. 8 is a diagram illustrating a situation in which food enters the steaming part in the food processing system according to the embodiment of the present invention.
FIG. 9 is a side view illustrating a portion of a conveying part of the food processing system according to an embodiment of the present invention.
FIG. 10 is a diagram illustrating a situation in which food is discharged from the steaming part in the food processing system according to the embodiment of the present invention.
FIG. 11 is a diagram illustrating a steaming door part of the steaming part according to an embodiment of the present invention.

### [Mode for Invention]

Hereinafter, some embodiments of the present invention will be described in detail through illustrative drawings. It is to be noted that in giving reference numerals to components of each of the accompanying drawings, the same components will be denoted by the same reference numerals even if they are shown in different drawings. Further, in describing the embodiments of the present invention, related well-known constructions or functions will not be described in detail in the case in which it is decided that they may unnecessarily obscure the understanding of the embodiments of the present invention.

In addition, the terms 'first', 'second', A, B, (a), (b), and the like, will be used in describing the components of embodiments of the present disclosure. These terms are used only in order to distinguish any component from other components, and features, sequences, or the like, of corresponding components are not limited by these terms. When it is mentioned that any component is "connected" or "coupled" to another component, it is to be understood that any component is directly connected or coupled to another component or is connected or coupled to another component with the other component interposed therebetween.

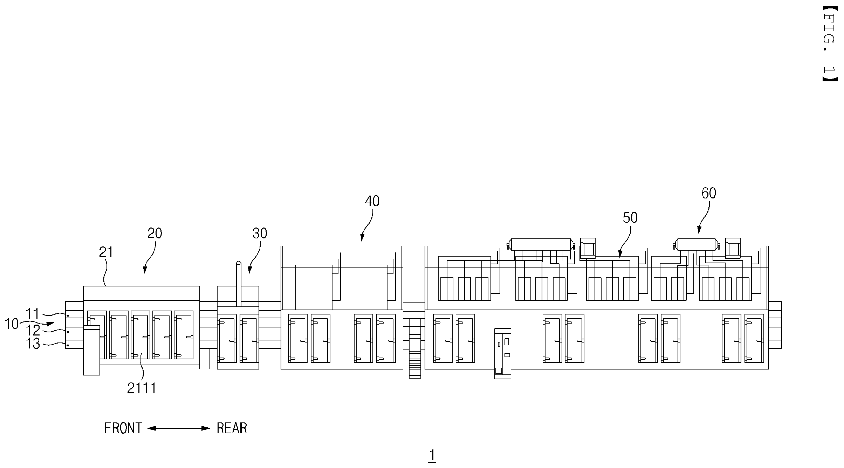

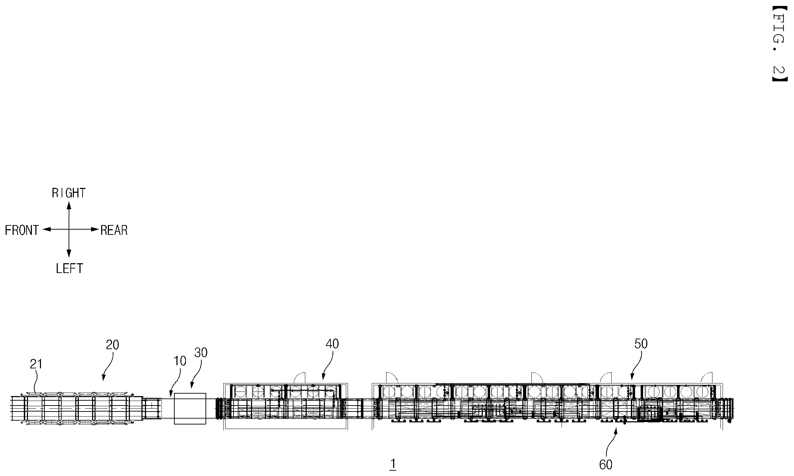

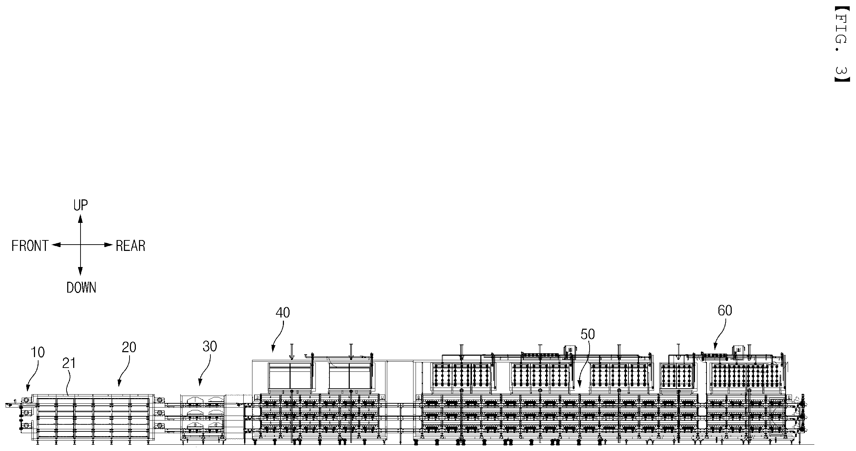

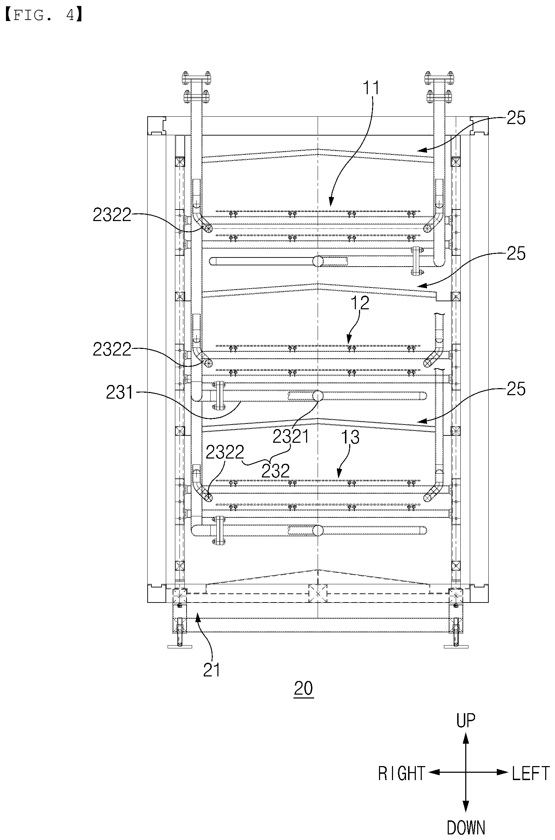

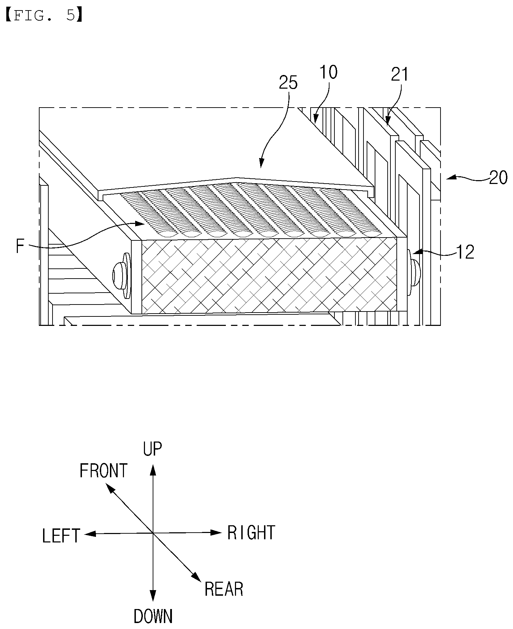

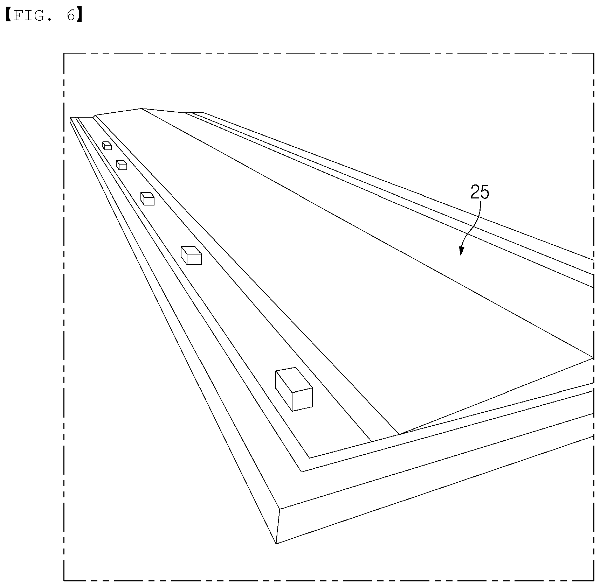

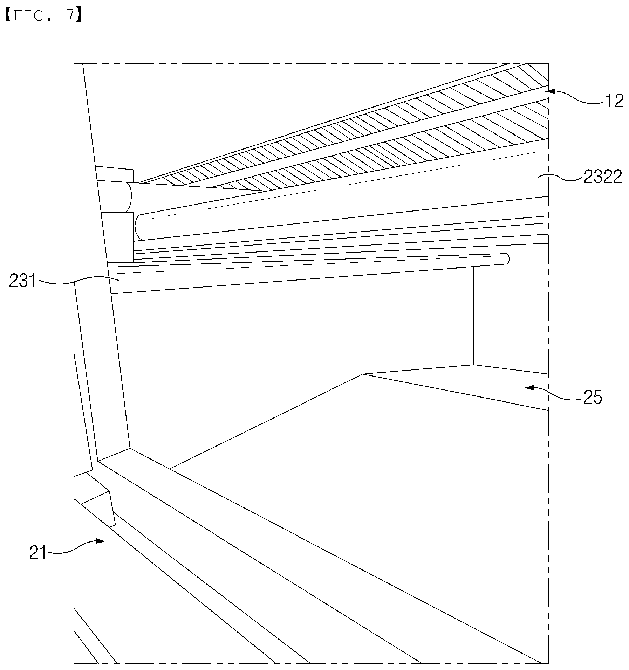

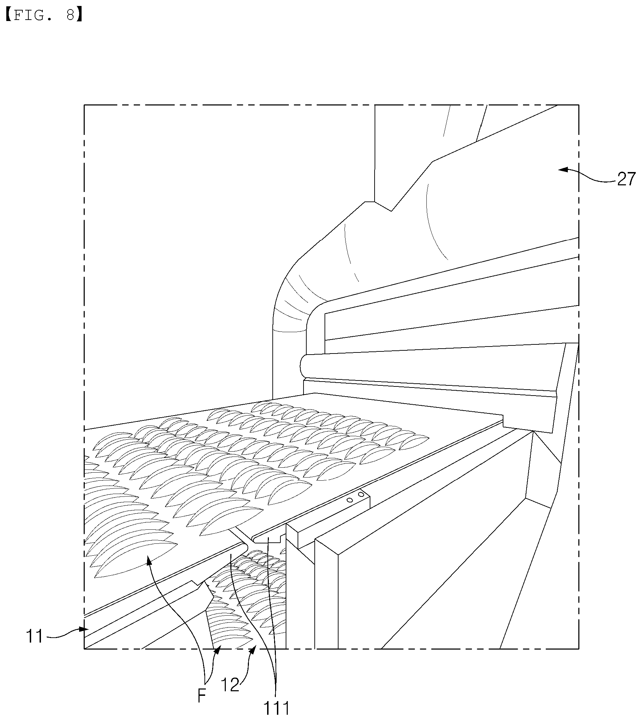

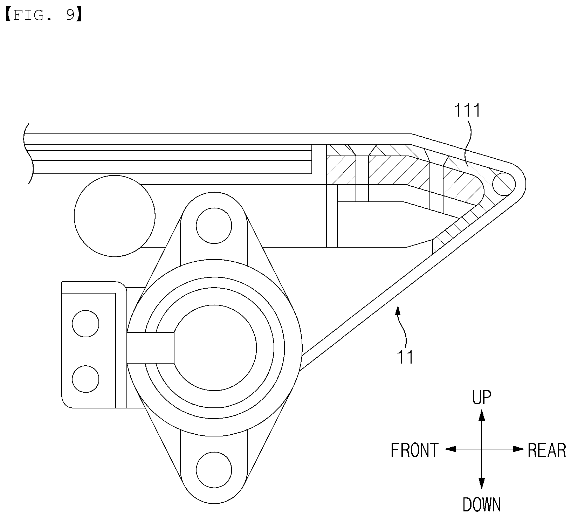

FIG. 1 is a perspective view of a food processing system 1 according to an embodiment of the present invention. FIG. 2 is a top view of the food processing system 1 in a state in which an internal structure of the food processing system 1 according to the embodiment of the present invention is exposed. FIG. 3 is a side view of the food processing system 1 in a state in which the internal structure of the food processing system 1 according to the embodiment of the present invention is exposed. FIG. 4 is a front view of a food steaming apparatus in a state in which an internal structure of a steaming part 20 according to an embodiment of the present invention is exposed. FIG. 5 is a diagram illustrating a portion of an internal structure of the food steaming apparatus according to an embodiment of the present invention. FIG. 6 is a perspective view of a steaming cover according to an embodiment of the present invention. FIG. 7 is a view illustrating a state in which a side surface of the steaming part 20 according to an embodiment of the present invention is opened. FIG. 8 is a diagram illustrating a situation in which food F enters the steaming part 20 in the food processing system 1 according to the embodiment of the present invention. FIG. 9 is a side view illustrating a portion of a conveying part 10 of the food processing system 1 according to an embodiment of the present invention.

Referring to the drawings, the food processing system 1 according to an embodiment of the present invention may include a conveying part 10, a steaming part 20, and a freezing part 50. The food processing system 1 may include an anti-cooling part 40 and a pre-cooling part 30, and the conveying part 10, the anti-cooling part 40, the pre-cooling part 30, and the freezing part 50 may constitute a food (F) freezing device. The anti-cooling part 40 and the pre-cooling part 30 may constitute a cooling part. The steaming part 20, the anti-cooling part 40, the pre-cooling part 30, and the freezing part 50 may be located in order from front to rear. The food steaming apparatus according to an embodiment of the present invention may include the conveying part 10 and the steaming part 20. The food processing system 1 may include a defrosting part 60. In this specification, the forward-backward, left-right, and up-down directions are relative directions used for convenience of explanation and may vary depending on a state in which the food processing system 1 is disposed.

### Anti-cooling part 40, Pre-cooling part 30, and Freezing part 50

The anti-cooling part 40 is a component provided to anti-cool the food F conveyed from the steaming part 20 through the conveying part 10. The anti-cooling processing refers to a processing method that cools the food F by exposing the food F to outside air or allowing outside air to flow around the food (F) without using a separate refrigerant.

The anti-cooling part 40 may include an anti-cooling chamber to form an anti-cooling space therein, and the anti-cooling chamber may have an opened opening to allow outside air to enter and exit the anti-cooling space. The anti-cooling part 40 is disposed inside the anti-cooling chamber and may include an outside air supply means capable of supplying outside air by pumping the outside air to the anti-cooling space. The anti-cooling part 40 may be disposed behind the steaming part 20.

The anti-cooling chamber may take the shape of a box opened in forward-backward directions. The conveying part 10 may penetrate through the opening of the anti-cooling chamber in the forward-backward directions. Therefore, the food F transported backward through the conveying part 10 may be anti-cooled while passing through the anti-cooling space.

The pre-cooling part 30 is a component provided to precool the food (F) that has been anti-cooled and conveyed by the conveying part 10. The pre-cooling processing refers to a processing method of cooling food F by using a refrigerant to allow cooled air to flow around the food F. The pre-cooling part 30 may be disposed behind the anti-cooling part 40.

The pre-cooling part 30 may include a pre-cooling chamber to form a pre-cooling space therein. The pre-cooling chamber may have the shape of the box opened in the forward-backward directions. The conveying part 10 may penetrate through the opening of the pre-cooling chamber in the forward-backward directions. Therefore, the food F conveyed backward through the conveying part 10 may be pre-cooled while passing through the pre-cooling space.

The pre-cooling part 30 is disposed inside the pre-cooling chamber and may include a pre-cooling air providing means that may pump air cooled by a refrigerant and supply the cooled air to the pre-cooling space. The pre-cooling part 30 may include a pre-cooled air generating means that may cool air through heat exchange between the refrigerant and air and provide the cooled air to the pre-cooled air providing means. The pre-cooling air generating means may be disposed on an upper side of the pre-cooling chamber. The pre-cooled air generating means may be a brine cooler using an indirect cooling method using a refrigerant containing salt water or the like.

The temperature within the pre-cooling part 30 may be 3 to 7°C, and preferably 5°C, and the food F discharged from the pre-cooling part 30 may have a temperature of 35 to 45°C, and preferably 40°C.

The freezing part 50 is a component provided to freeze the food F that is steamed in the steaming part 20 and is conveyed by the multi-stage conveying parts 10. The freezing part 50 is disposed behind the pre-cooling part 30 and may freeze the food F that has been steamed and then pre-cooled and is conveyed by the conveying part 10. The freezing part 50 may include a freezing chamber to form a freezing space therein. The freezing chamber may have the shape of the box opened in the forward-backward directions. The conveying part 10 may penetrate through the opening of the freezing chamber in the forward-backward directions. Therefore, the food F conveyed backward through the conveying part 10 may be frozen while passing through the freezing space.

The freezing part 50 may include a freezing module that provides cold air which is cooled air. The freezing module may include a freezing air providing means and a freezing air generating means. The freezing air providing means is disposed inside the freezing chamber and may pump air cooled by the refrigerant and supply the cooled air to the freezing space. The freezing air generating means may cool air through heat exchange between the refrigerant and air and provide the cooled air to the freezing air providing means. The freezing air generating means may be disposed on an upper side of the freezing chamber. The freezing air generating means may be a freezing device using refrigerants such as R-404 and R-507.

The temperature within the freezing part 50 may be -37 to -40°C, and the food F discharged from the freezing part 50 may have a temperature of -5 to -10°C, and preferably -7°C. The food F conveyed by the conveying part 10 is slowly cooled while passing through the anti-cooling part 40, the pre-cooling part 30, and the freezing part 50 in order, and thus, may be minimized from experiencing rapid temperature changes and ultimately discharged in a frozen state. As the slow cooling is performed, the load on the freezing part 50 may be reduced.

At least one of the anti-cooling part 40, the pre-cooling part 30, and the freezing part 50 may include a plurality of air supply means disposed at positions corresponding to each stage of the conveying part 10 and pumping air. This air providing means may be an outside air providing means in the anti-cooling part 40, the pre-cooling air providing means in the pre-cooling part 30, and the freezing air providing means in the freezing part 50. The air providing means may suck and process outside air, and provide the processed air to each chamber, or may reprocess the air used in the chamber and provide the reprocessed air back to the chamber.

Among the plurality of air providing means, the air providing means disposed at positions corresponding to different stages may operate independently. Therefore, the food F seated on each conveying stage may be processed at different temperatures. For such individual control, a temperature sensor that acquires temperature may be disposed at a location adjacent to each conveying stage. Depending on the temperature acquired by the temperature sensor, the air providing means corresponding to the temperature sensor may be controlled.

At least one of the anti-cooling part 40, the pre-cooling part 30, and the freezing part 50 may include a wind volume control damper provided to adjust the flow rate of air provided to the plurality of air providing means. The wind volume control damper has a pipe-shaped appearance and may be disposed in the middle of an air flow path, and includes a damper member disposed on the inside to adjust a posture, and may control the air volume provided through the wind volume control damper by adjusting the posture of the damper member.

The anti-cooling part 40, the pre-cooling part 30, and the freezing part 50 may be equipped with air curtains at their respective inlets and outlets to spray air onto the food F. The air curtain may be disposed to remove foreign substances on the food F conveyed by the conveying part 10 and prevent foreign substances other than the food F from entering the anti-cooling chamber, the pre-cooling chamber, and the freezing chamber.

The pre-cooling part 30 and the anti-cooling part 40 cool the food F but do not freeze the food F, so the pre-cooling part 30 and the anti-cooling part 40 may form the cooling part. That is, the cooling part is a part that may be disposed between the freezing part 50 and the steaming part 20 and provided to cool the food F that is steamed and conveyed by the conveying part 10 before being conveyed to the freezing part 50.

The openings and doors that open and close these openings, such as an anti-cooling door, a pre-cooling door, and a freezing door, may also be formed on the left and right side surfaces of the anti-cooling part 40, the pre-cooling part 30, and the freezing part 50. In addition, cleaning means may be disposed inside the anti-cooling part 40, the pre-cooling part 30, and the freezing part 50 to spray substances such as air, steam, washing water, and cleaning agent, thereby cleaning each chamber.

The anti-cooling part 40, the pre-cooling part 30, and the freezing part 50 may have different lengths in the forward-backward directions. The length in the forward-backward directions may become longer from the anti-cooling part 40 toward the pre-cooling part 30 and the freezing part 50.

### Defrosting part 60

The defrosting part 60 is a component connected to the freezing part 50 to remove frost formed inside the freezing part 50. The defrosting part 60 may be provided to remove frost by spraying air into the freezing part 50. The defrosting part 60 may spray air on the freezing module rather than the inside of the freezing chamber to remove frost generated within the freezing module.

The defrosting part 60 may include a plurality of defrosting nozzles, an air tank, and an air drying module. The defrosting nozzle may be connected to the freezing module and configured to spray air into the freezing air generating means of the freezing module. The defrosting nozzle may be connected to an air tank through a pipe, and the air tank may transmit dried air stored inside to the defrosting nozzle through a pipe. Valves may be disposed in each pipe to control the amount of air transmitted to the defrosting nozzle. An air drying module may be connected to the air tank to suck and dry air introduced from the outside and to store the sucked and dried air in the air tank. The air drying module may be a dehumidifier that performs dehumidification by cooling air and condensing water vapor or performs dehumidification by using an adsorbent such as silica gel, but the type thereof is not limited thereto.

The defrosting nozzle may be disposed to face a frost-prone portion of the freezing air generating means. As illustrated, the defrosting nozzle may be disposed in a grid shape to face the freezing air generating means from a side surface of the freezing air generating means, and may physically remove frost by spraying high-pressure air.

### Conveying part 10

The conveying part 10 is a component provided to continuously convey the food F. The conveying part 10 may convey the food F along the forward-backward directions. The conveying part 10 may be configured in multi stages. Each stage of the conveying part 10 may be spaced apart in a vertical direction. As in an embodiment of the present invention, the conveying part 10 may be configured in three stages of a first conveying part 11, a second conveying part 12, and a third conveying part 13 disposed in order in a downward direction, but the number of stages is not limited thereto.

Food (F) supply equipment may be disposed in front of the conveying part 10. The food (F) supply equipment may be disposed in parallel with each stage of the conveying part 10, but disposed on the left-right direction side of each stage of the conveying part 10 to transmit the food F to the conveying part 10 along the left-right direction, and does not transmit the food F to the conveying part 10 through a straight path, but may be a rotary supply device with a rotating structure, and the type thereof is not limited thereto.

Each stage of the conveying part 10 may include a conveyor provided to convey the seated food F. The conveyor may extend in the forward-backward directions, but may be disposed so that a plurality of foods F may be disposed along the left-right direction and the forward-backward directions. The conveyor may include a plurality of rollers and a belt wound around an outer peripheral surface of the plurality of rollers, and rotate the belt through the rotation of the roller so that the food F disposed on an upper surface of the belt may be conveyed in a predetermined direction. In an embodiment of the present invention, the roller may rotate in the left-right direction orthogonal to the forward-backward directions as an axial direction, so the belt may transport the food F rearward.

The conveyor may be divided into a plurality of parts along the forward-backward directions. Edge plates 111, which are front and rear ends of the conveyor part, may have a shape in which a height decreases in an up-down direction as it moves outward in the forward-backward directions. Therefore, as illustrated, the conveyor part may have the tapered edge plate 111 to prevent tearing or collapse of food that may occur when connecting the conveyor parts using a roller, etc., so the food F is smoothly transported without collapsing.

The conveying part 10 may include an inverter module that drives the conveyor. A driving speed of the conveyor may be adjusted under the control of the inverter module. The food processing system 1 according to an embodiment of the present invention may further include a processor. The processor may be electrically connected to the inverter module. Here, the electrical connection comprehensively means not only that each component is connected to a conductive material that may transmit power, but also that each component is connected to enable electrical communication for transmitting and receiving information even without physical contact.

The processor is electrically connected to each component to control components such as the inverter module. The processor may generate a control signal that controls the food steaming apparatus and transmit the generated control signal to each component. Processors, such as a central processing part (CPU), a field programmable gate array (FPGA), an application specific integrated circuit (ASIC) capable of logical operations, may be used, but the type thereof is not limited thereto.

The processor may be electrically connected to each component, and therefore, further include communication modules, which can be connected by wires or communicate wirelessly, to communicate with each other.

Control commands performed by the processor may be stored and utilized in a storage medium, and the storage medium may be a device such as a hard disk drive (HDD), a solid state drive (SSD), a server, a volatile medium, or a non-volatile medium, but the type thereof is not limited thereto. In addition, data that the processor requires to perform tasks may be further stored in the storage medium.

The conveying part 10 may include a weight acquisition part disposed on a portion of the conveyor located on the front and rear sides of a steaming chamber 21 to acquire a weight of the food F seated on the conveyor. The weight acquisition part may include a load cell for acquiring the weight of the food F.

The processor may be electrically connected to the weight acquisition part. The processor may calculate the steaming degree of the food F using the weight of the food F entering the steaming chamber 21, which will be described later, acquired by the weight acquisition part, and the weight of the food F discharged from the steaming chamber 21. The processor may control the inverter module based on the calculated steaming degree. For example, when the calculated steaming degree does not fall within a predetermined reference steaming degree range, the inverter module may be controlled to make the conveyor run slower or faster than the current state so that the newly calculated steaming degree falls within the reference steaming degree range. When the driving speed of the conveyor increases, the steaming degree may decrease, and when the driving speed of the conveyor decreases, the steaming degree may increase.

### Steaming part 20

The steaming part 20 is a part provided to perform the steaming processing that cooks the food F using steam. The steaming part 20 may steam the food F conveyed by the conveying part 10. The steaming part 20 may be disposed in front of the pre-cooling part 30 and transmit the steamed food F to the pre-cooling part 30 to be pre-cooled.

The steaming part 20 may include the steaming chamber 21. The steaming chamber 21 may form a steaming space through which the multi-stage conveying parts 10 pass so that the food F conveyed by the multi-stage conveying parts 10 may be steamed. The steaming chamber 21 has the shape of the box opened in the forward-backward directions, so the steaming chamber 21 may have the opening in the forward-backward directions. The conveying part 10 may pass through the opening of the steaming chamber 21 in the forward-backward directions. Therefore, the food F transported backward through the conveying part 10 may be steamed while passing through the steaming space. In order for the effective steaming to occur, the steaming gate may be disposed in the opening of the steaming chamber 21 in the forward-backward directions to temporarily close the forward-backward directions opening to close or open the steaming space.

The steaming part 20 may include a conveying cover 25. The conveying cover 25 may be configured in plurality. The conveying cover 25 may be provided to cover each of the multi-stage conveying parts 10 from the upper side of the multi-stage conveying parts 10 passing through the inside of the steaming space to divide the steaming space into a plurality of steaming division spaces which are a plurality of spaces.

A central portion of the conveying cover 25 based on the left-right direction may have a shape inclined upward with respect to an inner direction based on the left-right direction. Therefore, it may have a shape where the distance of the conveying cover 25 from the conveyor increases as it goes toward the center. A lower shielding surface, which is a central portion of a lower surface of the conveying cover, may have a profile inclined upward with respect to the inner direction based on the left-right direction when viewed along the forward-backward directions. An upper shielding surface, which is a central portion of an upper surface of the conveying cover 25, may have a profile inclined upward with respect to the inner direction based on the left-right direction when viewed along the forward-backward directions. The conveying cover 25 may have this shape, so even if condensate, which is water generated by steam, forms on the lower surface of the conveying cover 25, the condensate may be guided outward based on the left-right direction and fall, thereby preventing the condensate from falling on the food F located in the center based on the left-right direction.

The steaming part 20 may include a baffle plate. The baffle plate may be coupled to the conveying cover 25. Therefore, the number of baffle plates may correspond to the number of steaming parts 20. When viewed along the forward-backward directions, the baffle plate may have a shape inclined upward with respect to the inner direction based on the left-right direction, similar to the conveying cover 25, and have a predetermined thickness along the up-down direction. The baffle plate is made of an insulating material such as glass wool and can insulate each steaming division space.

The plurality of conveying covers 25 may be selectively disposed in a cover state in which the plurality of conveying covers are unfolded and cover the multi-stage conveying parts 10, and in a folded state in which the plurality of conveying covers are folded along a left-right direction and do not cover the multi-stage conveying parts 10. That is, the conveying cover 25 may be folded to form the integrated steaming space without forming the steaming division space, or the conveying cover 25 may be unfolded to form the steaming division space. When the integrated steaming space is formed, a single type of food may be disposed throughout the conveying part 10, and when the steaming division space is formed, different types of foods may be disposed in each steaming division space. Different types of foods are disposed in each steaming division space, and temperature, etc., for each steaming division space is controlled independently from each other, so each type of foods may be properly processed.

The steaming part 20 may include a plurality of temperature acquisition parts disposed adjacent to each stage of the multi-stage conveying parts 10 to acquire temperature. The temperature acquisition part may be disposed adjacent to at least one of the front, middle, and rear ends of each stage of the conveying part 10 inside the steaming chamber 21. The processor may be electrically connected to the plurality of temperature acquisition parts.

The steaming part 20 may include a plurality of steam providing parts. The plurality of steam providing parts may be electrically connected to the processor and disposed at positions corresponding to each stage of the multi-stage conveying parts 10 to provide steam to the plurality of steaming division spaces, respectively. The plurality of steam providing parts may be controlled independently of each other. The steam providing part may include a steam generating member that heats water to generate steam and provides the generated steam to pipes to be described later.

The steam providing part may include a front-rear pipe 232. The front-rear pipe 232 is a pipe extending along the forward-backward directions and may provide steam to the steaming space through a plurality of holes arranged along the forward-backward directions. The front-rear pipe 232 may include a central front-rear pipe 2321 and an outer front-rear pipe 2322. The central front-rear pipe 2321 may be disposed above the multi-stage conveying parts 10. The outer front-rear pipe 2322 may be disposed to extend along the forward-backward directions on the left and right sides of the multi-stage conveying parts 10. The steam provided by the outer front-rear pipe 2322 is not sprayed directly onto the food F, but flows in the steaming space and reaches the food F, thereby indirectly steaming the food F.

The steam providing part may include a left-right pipe 231. The left-right pipe 231 extends along the left-right direction and may provide steam to the steaming space through a plurality of holes arranged along the left-right direction.

The steam providing part may include only the front-rear pipe 232, or may include the left-right pipe 231 together with the front-rear pipe 232.

The processor may control the amount of steam provided through the plurality of steam providing parts based on the temperature obtained from the plurality of temperature acquisition parts. For example, the processor may control the plurality of steam providing parts so that the temperature acquired by the plurality of temperature acquisition parts is within a predetermined reference temperature range. As the amount of steam provided through the steam providing part increases, the temperature acquired at the temperature acquisition part may increase, and the temperature of the corresponding steam division space may increase. As the amount of steam provided through the steam providing part decreases, the temperature acquired at the temperature acquisition part may decrease, and the temperature of the corresponding steam division space may decrease.

In addition, the processor can control the amount of steam provided through the steam providing part by receiving a t least one of the input product type, product volume, product mass, and product shape as input values. The processor can individually collect the above-described temperature and input values for each stage of the multi-stage conveying parts 10, and control the steam providing part to provide independent amounts of steam to each stage based on the collected information. For example, when a first type of product is input into the first stage of the multi-stage conveying parts 10, the amount of steam provided by the steam providing part may be controlled so that the temperature around the first stage is formed at a first temperature corresponding to the first type of product. When a second type of product different from the first type of product is input into the second stage of the multi-stage conveying part 10, which is different from the first stage, the amount of steam provided by the steam providing part 10 can be controlled so that the temperature around the second stage is formed at a second temperature corresponding to the second type of product. When the second type of product is input into the first stage, the amount of stem provided by the steam providing part so that the temperature around the first stage is set to the second temperature.

The processor may control the inverter module based on the temperatures acquired by the plurality of temperature acquisition parts to adjust the speed at which the multi-stage conveying parts 10 convey the food F. For example, the processor may control the inverter module so that the higher the temperature acquired by the plurality of temperature acquisition parts, the faster the conveying part 10 conveys the food F. The processor may individually control the speed at which each stage conveys the food F according to the input value for each stage of the multi-stage conveying part 10. Since the speed required for steaming varies depending on the type of product, for example, when a product that requires a long time to steam is put into one stage of the multi-stage conveying part 10, the speed at which this stage transports food F may be reduced.

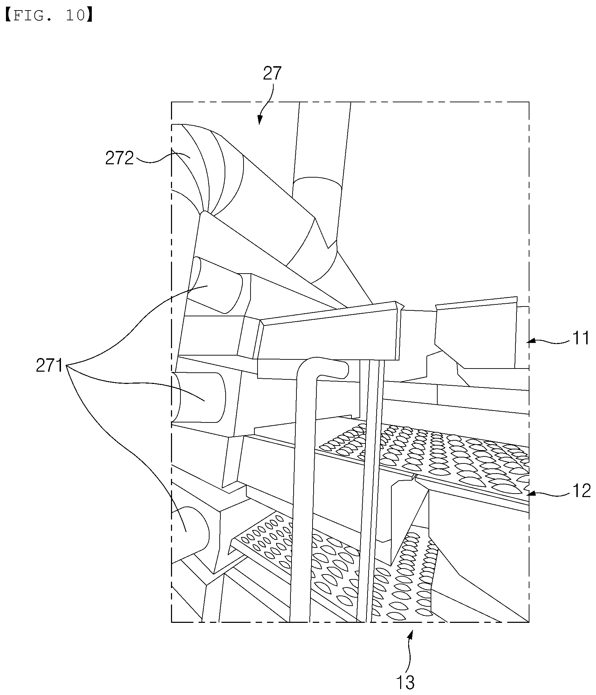

FIG. 10 is a diagram illustrating a situation in which the food F is discharged from the steaming part 20 in the food processing system 1 according to an embodiment of the present invention.

The steaming part 20 may include an air circulation part 27. The air circulation part 27 may be configured in plurality. The air circulation part 27 may be electrically connected to the processor. The plurality of air circulation parts 27 may be connected to the steaming chamber 21 so as to communicate with the plurality of steaming division spaces, respectively, in order to flow air in the plurality of steaming division spaces. The processor may control the plurality of air circulation parts 27 to adjust a flow rate of air flowing in the plurality of steaming division spaces based on the temperature acquired by the plurality of temperature acquisition parts. Therefore, the processor may control the temperature of each steaming division space using not only the steam providing part but also the air circulation part 27. For example, the processor may control the plurality of air circulation parts 27 so that the temperature acquired by the plurality of temperature acquisition parts is within a predetermined reference temperature range. When the flow rate of air flowing in the steaming division space increases, the temperature acquired by the temperature acquisition part may decrease.

The air circulation part 27 may overall form a flow path in the form of a pipe or duct, and may include the air providing member. The air providing member is provided to provide air to the steaming space and may be disposed adjacent to an inlet through which the food F enters the steaming chamber 21. The air circulation part 27 may include a recovery member 271. The recovery member 271 may be provided to discharge air from the steaming space, and disposed adjacent to an outlet through which the food F is discharged from the steaming chamber 21. The air providing member and the recovery member 271 may be disposed adjacent to the front and rear ends of the steaming chamber 21, respectively, so that a flow of air is formed backward. The recovery member 271 may include a fan that generates the flow of air through rotation. Through the recovery member 271, not only air but also steam provided in the steaming space may be discharged to the outside. The air circulation part 27 may include a recovery pipe 272. The recovery pipe 272 may be connected to the recovery member 271, and may collect the air or steam discharged by each recovery member 271 and guide the collected air or steam to a predetermined location where it is easy to discharge.

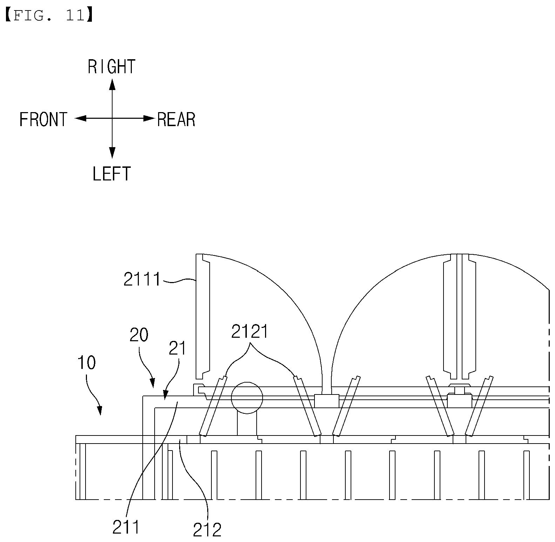

FIG. 11 is a diagram illustrating a steaming door part of the steaming part 20 according to an embodiment of the present invention.

The steaming part 20 may include a steaming door part. The steaming door part is provided to open and close the opening formed along the left-right direction in the steaming chamber 21. Specifically, the steaming chamber 21 may be formed in a dual structure. That is, the steaming chamber 21 may be formed in the form in which the external steaming chamber 211 surrounds the internal steaming chamber 212, which forms the steaming space. Openings may further be formed in the steaming chamber 21 along the left-right direction. The steaming door part may be provided to open and close the left-right direction opening.

The steaming door part may include an internal steaming door 2121 which opens and closes the opening of the internal steaming chamber 212, and an external steaming door 2111 that is disposed outside the internal steaming door 2121 based on the left-right direction to open and close the opening of the external steaming chamber 211. In other words, the steaming door part may have a double door structure to prevent accidents that may occur due to leakage of steam filling the steaming space. For proper processing, the user may access the steaming space by opening the external steaming door 2111 and then opening the internal steaming door 2121. The space between the external steaming door 2111 and the internal steaming door 2121 may be sealed when each door is closed.

The food processing system 1 may further include a packaging part that is configured to put the food F frozen by the freezing part 50 into a packaging material and package the frozen food F.

Although it has been described that all components configuring the embodiment of the present invention are combined with each other as one component or are combined and operated with each other as one component, the present invention is not necessarily limited to the abovementioned embodiment. That is, all the components may also be selectively combined and operated with each other as one or more components without departing from the scope of the present invention. In addition, hereinabove, the terms "include", "configure", "have", or the like, are to be interpreted to imply the inclusion of other components rather than the exclusion of other components, since they mean that a corresponding component may be included unless particularly described otherwise. Unless defined otherwise, all the terms including technical and scientific terms have the same meaning as meanings generally understood by those skilled in the art to which the present invention pertains. Generally used terms such as terms defined in a dictionary should be interpreted as the same meanings as meanings within a context of the related art and should not be interpreted as ideally or excessively formal meanings unless clearly defined in the present invention.

The technical idea of the present invention has been illustratively described hereinabove. It will be appreciated by those skilled in the art that various modifications and alterations may be made without departing from the essential characteristics of the present invention. Accordingly, the embodiments disclosed in the present invention are not to limit the technical idea of the present invention, but are to describe the technical idea of the present invention. The scope of the present invention is not limited to these exemplary embodiments. The protection scope of the present invention should be interpreted by the following claims, and it should be interpreted that all technical ideas equivalent to the following claims fall within the scope of the present invention.

## Claims

1. A food steaming apparatus, comprising:
multi-stage conveying parts (10) provided to continuously convey food in forward and backward directions and spaced apart from each other in a vertical direction;
a steaming part (20) including a steaming chamber (21) forming a steaming space through which the multi-stage conveying parts (10) pass, so as to steam the food conveyed by the multi-stage conveying parts (10), and a plurality of conveying covers (25) provided to respectively cover the multi-stage conveying parts (10) at a top of the multi-stage conveying parts (10) passing through an inside of the steaming space so as to divide the steaming space into a plurality of steaming division spaces that are a plurality of spaces, and a plurality of temperature acquisition parts disposed at positions adjacent to each stage of the multi-stage conveying parts (10) to acquire temperature, and a plurality of air circulation parts (27) connected to the steaming chamber (21) to communicate with each of the plurality of steaming division spaces in order to flow air in the plurality of steaming division spaces; and
a processor electrically connected to the plurality of temperature acquisition parts, the plurality of air circulation parts (27) and the multi-stage conveying parts (10),
wherein the processor controls:
a speed at which the multi-stage conveying parts (10) convey the food based on the temperatures acquired by the plurality of temperature acquisition parts, and
the plurality of air circulation parts (27) to adjust a flow rate of air flowing in the plurality of steaming division spaces based on the temperatures acquired by the plurality of temperature acquisition parts.

2. The food steaming apparatus of claim 1, wherein a lower shielding surface, which is a portion of a lower surface of the conveying cover (25), has a profile inclined upward with respect to an inner direction based on a left-right direction when viewed along the forward and backward directions.

3. The food steaming apparatus of claim 1, wherein an upper shielding surface, which is a portion of an upper surface of the conveying cover (25), has a profile inclined upward with respect to an inner direction based on a left-right direction when viewed along the forward and backward directions.

4. The food steaming apparatus of claim 1, wherein the steaming part (20) further includes a plurality of steam providing parts electrically connected to the processor and disposed at the positions corresponding to each stage of the multi-stage conveying parts (10) in order to provide steam to the plurality of steaming division spaces,
wherein the steam providing part includes an outer front-rear pipe (2322) extending along forward and backward directions to be disposed on left and right sides of the multi-stage conveying parts (10), and
the processor controls an amount of steam provided through the plurality of steam providing parts based on the temperatures acquired by the plurality of temperature acquisition parts.

5. The food steaming apparatus of claim 1, wherein the multi-stage conveying parts (10) include a conveyor provided to convey the food seated thereon and an inverter module driving the conveyor, and
the processor is electrically connected to the inverter module.

6. The food steaming apparatus of claim 1, wherein the plurality of air circulation parts (27) include:
an air providing member provided to provide air to the steaming space and disposed adjacent to an inlet through which the food enters the steaming chamber (21); and
a recovery member (271) provided to discharge the air from the steaming space and disposed adjacent to an outlet through which the food is discharged from the steaming chamber (21).

7. The food steaming apparatus of claim 1, wherein the steaming part (20) further includes a steaming door part provided to open and close an opening formed along a left-right direction in the steaming chamber (21), and
the steaming door part includes an internal steaming door (2121) and an external steaming door (2111) disposed outside the internal steaming door (2121).

8. The food steaming apparatus of claim 1, wherein the multi-stage conveying parts (10) include a conveyor provided to convey the food seated thereon and divided into a plurality of parts along the forward and backward directions, and
edge plates (111), which are front and rear ends of the conveyor part, have a shape whose height decreases as it goes outward based on the forward and backward directions.

9. The food steaming apparatus of claim 1, wherein the multi-stage conveying parts (10) include a conveyor provided to convey the food seated thereon and a weight acquisition part disposed on a portion of the conveyor located at front and rear sides of the steaming chamber (21) to acquire a weight of the food seated on the conveyor, and
wherein the processor is further electrically connected to the weight acquisition part, and
the processor calculates a steaming degree of the food using the weight of the food entering the steaming chamber (21) and the weight of the food discharged from the steaming chamber (21), which are acquired by the weight acquisition part.

10. The food steaming apparatus of claim 1, wherein the plurality of conveying covers (25) are selectively disposed in a cover state in which the plurality of conveying covers (25) are unfolded and cover the multi-stage conveying parts (10), and in a folded state in which the plurality of conveying covers (25) are folded along a left-right direction and do not cover the multi-stage conveying parts (10).
